# EUROPÄISCHE PATENTSCHRIFT

(11) **EP 3 509 973 B1**
(45) Veröffentlichungstag und Bekanntmachung des Hinweises auf die Patenterteilung: **05.08.2020**
(21) Anmeldenummer: 17787168.8
(22) Anmeldetag: 19.10.2017
(51) Int. Cl.: B65G 47/84, B65G 47/86, B65G 21/12, B65G 47/14

(54) **ROBOTISCHE TRANSPORTVORRICHTUNG ZUM TRANSPORTIEREN VON KLEINTEILEN UND MIT DER ROBOTISCHEN VORRICHTUNG DURCHFÜHRBARES VERFAHREN**
ROBOTIC TRANSPORT APPARATUS FOR TRANSPORTING SMALL PARTS, AND METHOD ABLE TO BE CARRIED OUT WITH THE ROBOTIC APPARATUS
DISPOSITIF DE TRANSPORT ROBOTIQUE POUR TRANSPORTER DES PETITES PIÈCES ET PROCÉDÉ POUVANT ÊTRE MIS EN OEUVRE AVEC LEDIT DISPOSITIF ROBOTIQUE

(30) Priorität: 19.10.2016 DE 102016119894
(43) Veröffentlichungstag der Anmeldung: 17.07.2019
(73) Patentinhaber: Beckhoff Automation GmbH, 33415 Verl (DE)
(72) Erfinder: HAAS, Melvin, 1090 La Croix (CH)
(74) Vertreter: Patentanwaltskanzlei WILHELM & BECK
(86) Internationale Anmeldenummer: PCT/EP2017/076724
(87) Internationale Veröffentlichungsnummer: WO 2018/073348

(56) Entgegenhaltungen:
- EP-A1- 2 982 622
- DE-A1- 3 422 150
- DE-U1- 29 612 787
- US-B1- 8 973 768
- US-B2- 6 688 451

## Beschreibung

Die Erfindung betrifft eine robotische Transportvorrichtung für Kleinteile, mit einem Transportmechanismus zum Transportieren der Kleinteile aus einer ersten, zur Aufnahme vorgesehenen Region zu einer zweiten zur Ablage vorgesehenen Region, mit einer Teileaufnahmeeinrichtung zum Aufnehmen einzelner Kleinteile in der ersten Region, zum vorübergehenden Festhalten dieser Kleinteile und zum Ablegen der Kleinteile in der zweiten Region, wobei die Teileaufnahmeeinrichtung an dem Transportmechanismus angebracht ist und mit diesem transportiert wird, wobei der Transportmechanismus so aufgebaut ist, dass er die Teileaufnahmeeinrichtung transportiert.

Die Erfindung betrifft außerdem ein mit dieser robotischen Transportvorrichtung durchführbares Verfahren.

Robotische Transportvorrichtungen zum Transportieren von Kleinteilen sind technische Vorrichtungen zum Transport und zur Ablage von Schüttgutteilen. Sie werden beispielsweise in automatisierten Produktionsanlagen und Montageprozessen benötigt, unter anderem in der Elektronik-, Automobil- und Verpackungsindustrie. Sie werden auch als Zuführroboter oder als Transportroboter bezeichnet. Kleinteile können dabei nicht nur sehr unterschiedliche Formen und Werkstoffe aufweisen, sondern auch sehr unterschiedliche Abmessungen besitzen. Meist sind Bauelemente im Millimetergrößenbereich gemeint, die Kleinteile können aber auch kleiner oder größer als in diesem Bereich sein.

Ursprünglich ist dieser Transport mit kranähnlichen robotischen Transportvorrichtungen vorgenommen worden. Diese simulieren quasi eine manuelle Arbeitskraft, die ein elektronisches Bauteil von einer Fläche nimmt und an einen anderen Ort trägt und dort zur Weiterverarbeitung ablegt. Eine automatische Transportvorrichtung realisiert dies beispielsweise durch einen Roboterarm, welcher das elektronische Bauteil mittels eines Greifers aufnimmt und am gewünschten Ort platziert.

Problematisch dabei ist, dass nicht jedes zu transportierende elektronische Bauelement exakt an einem Ausgangspunkt aufgefunden werden kann. Die elektronischen Bauelemente werden zwar zur Vorbereitung des Transportes häufig flächig auf einer Unterlage ausgebreitet, damit jeweils ein elektronisches Bauelement ergriffen werden kann, bedingt durch die Ausbreitung auf der Unterlage befindet sich aber jedes einzelne elektronische Bauelement dann auf einem geringfügig unterschiedenen Ort, der sich in X- wie auch in Y-Richtung geringfügig von dem optimalen Ort des Ergreifens beziehungsweise Aufnehmens unterscheidet.

In der Praxis werden häufig sogenannte Vibrations-Wendelfördertöpfe oder auch eine flexible Teileförderoberfläche in Kombination mit einem Bildverarbeitungssystem sowie einem Industrieroboter verwendet. Hierbei werden die zu transportierenden Kleinteile zunächst auf einer horizontalen Fläche unsortiert vereinzelt, mittels dem visuellen Teileerkennungssystem beziehungsweise dem Bildverarbeitungssystem erkannt und schließlich durch den Industrieroboter aufgegriffen. Die vereinzelten Kleinteile werden dann über eine bestimmte Distanz transportiert, am Zielort platziert und der Weiterverarbeitung zugeführt. Ein Beispiel für eine solche Konstruktion ist etwa aus der EP 916 457 A2 beziehungsweise aus der US 6056108 A bekannt.

Ein wesentlicher Nachteil der herkömmlichen Konzeption besteht darin, dass aufgrund der separaten Handhabung der einzelnen Kleinteile und der vergleichsweise langen Wegstrecken des Roboterarms zwischen dem Greifen des Bauteils auf der Aufnahmefläche und der Freigabe des Bauteils am Ort der Zuführung die Taktzeit recht hoch ist, mithin das damit durchgeführte Verfahren unbefriedigend langsam ist. Bestehende, roboterbasierte Zuführsysteme sind daher im Vergleich zu Vibrationswendelfördertöpfen zwar flexibel einsetzbar, jedoch verhältnismäßig langsam. Man versucht daher, technische Maßnahmen durchzuführen, die sich auf die Geometrie des Roboters beziehen. Dies ist kostenaufwändig und engt andere Möglichkeiten ein.

Andere Formen des Transports von ähnlichen Kleinteilen sehen einen Transportmechanismus mit Linearbewegung vor, wie etwa in der US 6 688 451 B2 beschrieben, die die Merkmale des Obergriffs des Anspruchs 1 und des Anspruchs 11 offenbart. Anstelle eines flexiblen Roboterarms wird dort ein entfernt an eine Seilbahn erinnerndes Konstrukt verwendet, das ein längliches Oval bildet. Um zwei Umlenkrollen, die auch als Antriebsscheiben dienen, an den Enden des Ovals ist eine das Oval selbst bildende endlose Transportbahn oder Kette gelegt. Mit dieser Transportbahn werden Greifer geführt, die in einer bestimmten Form die elektronischen Bauelemente am Aufnahmeort greifen und am Ziel- oder Ablageort wieder ablegen, wobei der Weg vom Aufnahmeort zum Ziel- oder Ablageort durch eine der beiden Längsseiten des Ovals gebildet wird, während die andere Längsseite des Transportmechanismus zur Rückführung der Greifer zum erneuten Einsatz verwendet wird.

Hier ergibt sich das Problem, dass der Aufnahmeort und der Ablageort relativ genau getroffen werden müssen, damit die Greifelemente jeweils die Kleinteile an den entsprechenden Orten auch aufnehmen und ablegen können.

Dieses Problem ist auch schon erkannt worden. In der US 7 712 598 B1 wird vorgeschlagen, die einzelnen Greifvorrichtungen beweglich auszugestalten, sodass sie die Aufnahme- und Ablegearbeiten etwas variabler durchführen können. Dabei wird ferner beschrieben, dass ein derartiges Transportsystem auch an einem SCARA-Roboterarm aufgehängt werden kann. Ein derartiges technisches Konzept ist jedoch für viele Anwendungsfälle nicht präzise genug. Ein weiteres Problem besteht darin, dass das beschriebene technische Konzept Spezialkomponenten benötigt und nicht mit am Markt und mithin kostengünstig erhältlichen Standardkomponenten der Automatisierungstechnik in die Praxis umsetzbar ist.

Aus der DE 296 12 787 U1 ist ein Transportmechanismus bekannt, der an zwei Aufhängeelementen aufgehängt ist, die in Transportrichtung einen Abstand voneinander aufweisen. Die zwei Aufhängeelemente sind unabhängig voneinander jeweils in eine Richtung senkrecht oder nahezu senkrecht zur Transportrichtung verschiebbar.

Es besteht weiterhin der Wunsch nach robotischen Transportvorrichtungen für Kleinteile, die noch weitere Möglichkeiten aufweisen, und bestimmte Aspekte der Problematik besser oder variabler erfüllen können, als die bereits bekannten robotischen Transportvorrichtungen.

Auch für ein entsprechendes Verfahren zur Durchführung dieser Transporte besteht Bedarf.

Aufgabe der vorliegenden Erfindung ist es daher, eine gattungsgemäße robotische Transportvorrichtung vorzuschlagen, die weitere oder andere Anforderungen aus dem Problemkreis von der Zuführung von Kleinteilen zu anderen Verfahrensschritten leistet.

Eine weitere Aufgabe besteht darin ein entsprechendes Verfahren vorzuschlagen.

Die Aufgaben werden durch die unabhängigen Ansprüche gelöst. Bevorzugte Weiterbildungen sind in den abhängigen Ansprüchen angegeben.

Diese Aufgabe wird bei einer gattungsgemäßen robotischen Transportvorrichtung dadurch gelöst, dass der Transportmechanismus an zwei Aufhängeelementen aufgehängt ist, dass die zwei Aufhängeelemente in Transportrichtung einen Abstand voneinander aufweisen, und dass jedes der zwei Aufhängeelemente unabhängig voneinander in eine Richtung senkrecht oder nahezu senkrecht zur Transportrichtung verschiebbar ist.

Bei einem gattungsgemäßen Verfahren wird diese Aufgabe erfindungsgemäß dadurch gelöst, dass der Transportmechanismus zweifach in einem Abstand voneinander an Aufhängeelementen aufgehängt ist, dass eine Verschiebung der beiden Aufhängeelemente des Transportmechanismus unabhängig voneinander in eine Richtung senkrecht oder nahezu senkrecht zur Transportrichtung oder in die Gegenrichtung vorgenommen wird, und dass der Aufnahmeort und der Ablageort der Teileaufnahmeeinrichtung in der zur Aufnahme vorgesehenen Region und unabhängig davon in der zur Ablage der Kleinteile vorgesehenen zweiten Region unabhängig gewählt wird.

Unter "nahezu senkrecht" ist zu verstehen, dass die Bewegung überwiegend aus einer Komponente senkrecht zur Transportrichtung besteht. Abweichungen um einige Grad sind je nach Ausführungsform möglich. Die Abweichung kann bis zu 45° betragen, liegt bevorzugt aber unter 10°, insbesondere unter 5°.

Das gilt auch im Folgenden, wenn von "nahezu senkrecht zur Transportrichtung" gesprochen wird.

Mit einer derartigen Konzeption lässt sich eine technisch funktionsfähige Kinematik aufbauen. Eine solche technisch funktionsfähige Kinematik lässt sich durch ein entsprechendes informationstechnisches System flexibel programmieren, sodass ein robotisch gesteuertes System entsteht.

Mit einer solchen robotischen Transportvorrichtung wird es möglich, stets einen direkten und zugleich linienförmigen Transport von Kleinteilen wie beispielsweise elektronischen Bauelementen auf anderen Anwendungsgebieten von einer Region, in der die Kleinteile aufgenommen werden, hin zu einer Region, in der die Kleinteile abgelegt werden, zu schaffen.

Auf diese Weise wird ein Transport von Teilen oder Komponenten von praktisch beliebiger Geometrie, Material und Beschaffenheit an einen gewünschten Ablageort im Bereich der zweiten, zur Ablage vorgesehenen Region möglich.

Ungeordnete Teile in einer ersten Region können durch Greifelemente oder pneumatische Sauger oder Magnete oder andere Teileaufnahmeeinrichtungen aufgenommen werden. Diese Teileaufnahmeeinrichtungen werden bevorzugt die Teile in Z-Richtung leicht anheben, um sie von der Fläche, auf der sie gelagert sind, abzuheben.

Alternativ kann der Transportmechanismus einschließlich der an ihm angebrachten Teileaufnahmeeinrichtungen in Z-Richtung angehoben und gesenkt werden. Das Anheben kann sowohl vor als auch hinter den Aufhängeelementen vorgenommen werden.

Hier wie auch eingangs und im Folgenden wird als "X-Richtung" die Richtung bezeichnet, über die die Kleinteile linear vom Aufnahmeort zum Ablageort transportiert werden. Konsequent ist mit der Y-Richtung die Richtung senkrecht oder nahezu senkrecht zur X-Richtung, aber in der horizontalen Ebene gemeint. Die Z-Richtung ist dann die vertikale Richtung, also senkrecht zur horizontalen Ebene, die von der X- und der Y-Richtung aufgespannt wird. In der Praxis kommt es auch vor, dass in der X-Y-Ebene eine Rampe berücksichtigt werden muss. Die Ebene kann also auch eine leicht angewinkelte schiefe Ebene sein, um Sonderfälle zu berücksichtigen.

Rein grundsätzlich könnte die erfindungsgemäße Transportvorrichtung auch auf schiefen Ebenen und in anderen, als diesen streng strukturierten Koordinaten arbeiten, wenn beispielsweise ganz andere Arten von Kleinteilen transportiert werden sollen, bei deren Transport die Schwerkraft in irgendeiner Form genutzt oder eingesetzt werden soll. Dann sind die hier an den folgenden gegebenen Randumständen beschriebenen technischen Merkmale entsprechend an diese besondere Konstellation anzupassen.

Die Teileaufnahmeeinrichtungen halten die Kleinteile nun in der beschriebenen Konzeption während des Transports in der Transportrichtung X zu einer zweiten Region fest.

Diese Teileaufnahmeeinrichtungen können nicht nur Greifelemente oder pneumatische Sauger sein, sondern auch mit magnetischer Anziehungskraft arbeiten oder komplexer aufgebaut sein. Insbesondere können sie auch mehrachsig angetrieben und beweglich aufgebaut sein. So können sie in Ausführungsformen auch noch zusätzliche Achsen besitzen, die in den meisten Ausführungsformen als Roboterachsen bezeichnet werden können. Mit einer Bewegung um diese Achsen kann eine Ausführungsform etwa ein Heben und Senken des Greifers in Z-Richtung zusätzlich herbeiführen, weiterhin oder alternativ eine winkelabhängige Ausrichtung oder Drehung ermöglichen oder die Teile auch schwenken oder auch umdrehen, wenn eine derartige andere Anordnung der Kleinteile in der zweiten Region gewünscht wird, in der eine Weiterverarbeitung der Kleinteile vorgenommen werden soll, etwa ein Anbringen auf einer Platine oder ein Einbau in eine größere Komponente eines elektronischen Produkts oder einer sonstigen Maschine.

Die Teileaufnahmeeinrichtungen können auch schlittenartig gestellt sein.

Bevorzugt ist vorgesehen, dass der Transportmechanismus mit mehreren Teileaufnahmeeinrichtungen ausgerüstet ist, welche aufeinander folgend Kleinteile aus der ersten Region aufnehmen und hintereinander längs der Transportrichtung zur zweiten Region bewegt werden.

In der Praxis wird man dabei außerdem bevorzugen, dass der Transportmechanismus mit mehreren, voneinander beabstandeten Teileaufnahmeeinrichtungen ausgerüstet ist.

Alternativ ist es allerdings auch möglich, dass zwei oder mehrere Teileaufnahmeeinrichtungen in Z-Richtung übereinander und/oder auch nebeneinander angeordnet sind und mit dem Transportmechanismus bewegt werden.

Durch das Vorsehen von mehreren Teileaufnahmeeinrichtungen an einem Transportmechanismus kann entsprechend die Zahl der transportierten Kleinteile pro Zeiteinheit deutlich erhöht werden. Zugleich wird auch die Gleichmäßigkeit des Transports dadurch gesteigert und kann gesteuert werden.

Eine besonders einfache und gedanklich leicht nachvollziehbare Ausführungsform wäre etwa eine erfindungsgemäße robotische Transportvorrichtung, mit der rundsymmetrische Teile unproblematisch aus einer ersten Region in eine zweite Region transportiert werden sollen. Dann genügt eine linear arbeitende Achse eines Transportmechanismus zum Transport der kleinen Teile in X-Richtung und eine Teileaufnahmeeinrichtung.

Der Kern der Erfindung besteht darin, dass ein im Wesentlichen in Transportrichtung, also in X-Richtung, liegender Transportmechanismus als Linearachse an zwei Aufhängungspunkten drehbar gelagert ist. Dabei lassen sich beide Aufhängungspunkte senkrecht oder nahezu senkrecht zur Transportrichtung, also in Y-Richtung verschieben.

Das hat zur Folge, dass sich die Position der Teileaufnahmeeinrichtung in der ersten, zur Aufnahme vorgesehenen Region vollkommen unabhängig von der aktuellen Position der Teileaufnahmeeinrichtungen in der zweiten, zur Ablage bestimmten Region bestimmen lässt.

Mit nur einer Drehachse ist das nicht möglich. Es lässt sich besonders leicht daran erkennen, dass mit einer unabhängigen Aufhängung an zwei Aufhängungspunkten eine freie Verschiebung des Transportmechanismus in Y-Richtung möglich wird. Die an dem Transportmechanismus angebrachten Teileaufnahmeeinrichtungen sowohl in der ersten Region, wie auch in der zweiten Region können damit im Extremfall ohne eine Drehung gleichzeitig parallel zu einander in die gleiche Richtung verschoben werden, oder aber auch genau antiparallel voneinander bewegt werden.

Durch die beiden Aufhängeelemente wird also eine freie parallele Verschiebung des Transportmechanismus samt der Teileaufnahmeeinrichtung in Y-Richtung möglich, ebenso wie eine Drehung des Transportmechanismus in einem bestimmten Winkelbereich.

Auf diese Weise kann die konkrete, lokale Aufnahmestelle problemlos für alle Kleinteile erreicht werden. Es wird stets eine direkte Verbindung zwischen vollkommen beliebigen Positionen in der ersten Region und in der zweiten Region möglich.

Bevorzugt ist ferner vorgesehen, dass eine oder mehrere Antriebseinrichtungen für die Verschiebung der zwei Aufhängeelemente vorgesehen sind.

Dabei kann vorgesehen werden, dass beide Aufhängeelemente an ihrem jeweiligen Aufhängungspunkt einen eigenen Antrieb besitzen. Die Teileaufnahmeeinrichtungen erhalten einen weiteren, separaten Antrieb in einer bevorzugten Ausführungsform. Dabei kann in einer Ausführungsform mit einer kettenähnlichen Anordnung der Transportmechanismen für jede derartige Kette ein Antrieb vorgesehen werden, der in diesem Fall zugleich auch alle Teileaufnahmeeinrichtungen an dieser Kette bewegt. Wird anstelle eines kettenartigen Transportmechanismus ein Transportmechanismus nach Art einer Linearachse gewählt, was in einer anderen Ausführungsform bevorzugt ist, so erhält jede dieser Transportmechanismen ihren eigenen Antrieb, der ebenfalls unabhängig von den beiden Aufhängungspunkten ist.

Neben den bevorzugten Formen der Transportmechanismen kann auch ein Transportmechanismus gewählt werden, bei dem auf einem Teilabschnitt in dem Bereich zwischen den beiden Regionen eine nichtlineare Bewegung erfolgt. Dadurch können auch Ausführungsformen mit einer Art Knick in der Transportrichtung in horizontaler oder auch schräger Richtung realisiert werden. Der Knick kann auch außerhalb der Mitte angeordnet sein.

Verschiedene Varianten und Modifikationen der Erfindung sind möglich, um der erfindungsgemäßen robotischen Transportvorrichtung zusätzliche Eigenschaften zu geben.

So ist es möglich, mehrere einzelne Transportmechanismen zu einer größeren robotischen Transportvorrichtung zusammen zu schließen, bei der mehrere lineare Transportmechanismen mit jeweils zwei Aufhängeelementen parallel zueinander aufgebaut werden. Dabei werden diese parallel angeordneten Transportmechanismen mit jeweils einer oder mehreren Teileaufnahmeeinrichtungen, beispielsweise mit Schlitten, ausgerüstet. Dadurch lässt sich auch ein simultaner Transport mehrere Kleinteile erreichen und auf diese Weise die Förderleistung eines Zuführroboters multiplizieren.

Eine solche Ausgestaltung ist für solche Anwendungsfälle sinnvoll, bei denen eine simultane Ankunft mehrerer Kleinteile in einem Weiterverarbeitungsprozess von Vorteil ist.

Alternativ ist es möglich, mehrere einzelne Transportmechanismen in einer Ausführungsform zu einer größeren robotischen Transportvorrichtung zusammenzuschließen, bei der mehrere lineare Transportmechanismen mit zwei Aufhängeelementen seriell, das heißt hintereinander, zueinander aufgebaut werden. Dabei werden diese in Serie angeordneten Transportmechanismen mit jeweils einer oder mehreren Teileaufnahmeeinrichtungen, beispielsweise mit Schlitten, ausgerüstet. Dadurch lässt sich auch eine komplexe Orientierung oder Platzierung von Kleinteilen mit einer hohen Geschwindigkeit und großen Präzision erreichen und auf diese Weise die Förderleistung eines Zuführroboters verbessern.

Die Teileaufnahmeeinrichtungen können sehr unterschiedlich ausgebildet sein. So kann beispielsweise mit einer Ausführungsform der Erfindung eine Palettierung auch mit einer rotativen Ausrichtung ermöglicht werden. Die Teileaufnahmeeinrichtungen sind dabei so ausgebildet, dass sie die Kleinteile vom oberen Rand des Aufnahmeplatzes in der ersten Region mit einer entsprechenden Rechtsdrehung aufnehmen und nach dem Transport in der zweiten Region am unteren Rand des Ablageplatzes ablegen. Ebenso ist es natürlich auch möglich, eine entsprechende Linksdrehung vorzusehen. Auf diese Weise wird in gewissem Maße auch eine Rotation der Teile möglich, ohne hierfür die Teileaufnahmeeinrichtungen drehbar auszuführen. Dies mag zu einer leicht verringerten Taktzeit führen, da eine etwas längere Armbewegung erforderlich ist. Solche Rotationsbewegungen werden bei bestimmten Kleinteilen aber gewünscht und können auf diese Weise mittels einer zusätzlichen Koordinierung in einer Steuereinrichtung, etwa durch eine Softwaresteuerung, ermöglicht werden.

Grundsätzlich lässt sich die erfindungsgemäße robotische Transportvorrichtung auch zum Zuführen von einzelnen Kleinteilen in Abhängigkeit von einem Abruf beispielsweise vom Zielort beziehungsweise Ablageort einsetzen. In bevorzugten Ausführungsformen wird jedoch ein Endlosbetrieb der Teileaufnahmeeinrichtungen an dem Transportmechanismus in der robotischen Transportvorrichtung durchgeführt. Umlaufende Greifer oder andere Teileaufnahmeeinrichtungen arbeiten analog zu einem Transportband oder, wie eingangs erörtert zu einer Seilbahn in einer fließenden Bewegung hintereinander weg. Es werden dann zwar die Kleinteile nacheinander aufgenommen, aber gleichzeitig in einem stets gleichbleibenden Abstand mittels des Transportmechanismus voneinander gefördert.

Grundsätzlich kann auch anstelle eines Transportbandes ein aus einer Vielzahl von Schlitten zusammengesetzter Transportmechanismus verwendet und auf diese Weise wiederum eine lineare Bewegung durchgeführt werden, bei der in den beiden Regionen jeweils eine Umkehrung erfolgt und sich auf diese Weise eine sich stets wiederholende lineare Bewegung ergibt. Denkbar ist auch eine parallele Nutzung mehrerer Linearachsen, welche jeweils exklusiv mit einem oder alternativ auch mit mehreren Teileaufnahmeeinrichtungen, gegebenenfalls mit Schlitten, bestückt sind.

Es gibt Anwendungsfälle, bei denen eine Ablage der Kleinteile am Ablageort in einem festen Zeitintervall bevorzugt oder gewünscht ist. Die Kleinteile sollen also nicht in einem unregelmäßigen Abstand oder in einer nicht gewünschten Häufung am Ablageort eintreffen.

Hierzu kann in einer Ausführungsform eine Staustrecke implementiert werden. Die Kleinteile werden während ihres Transports auf dem Transportmechanismus zwischen der ersten Region und der zweiten Region gestaut. Das lässt sich beispielsweise durch eine einzelne Steuerung eines jeden Schlittens beziehungsweise einer jeden Teileaufnahmeeinrichtung realisieren.

Alternativ ist auch ein System mit einem "durchrutschenden" Förderband möglich, bei der nachfolgende Kleinteile jeweils auf die Abfertigung des Vorgängers warten und erst nach dessen Ablieferung vorrücken.

Auf diese Weise wird auch der Zeitpunkt der Aufnahme und der Ablage der Kleinteile unabhängig voneinander steuerbar und der Einsatz der erfindungsgemäßen robotischen Transportvorrichtungen wird auch in getakteten Automatisierungsanlagen ermöglicht.

Weitere bevorzugte Merkmale der Erfindung sind in den Unteransprüchen und der nachfolgenden Beschreibung bevorzugter Ausführungsformen erläutert.

Im Folgenden werden anhand der Zeichnungen einige Ausführungsbeispiele der Erfindung näher erläutert. Es zeigen:
- **Figur 1**: eine perspektivische Darstellung einer robotischen Transportvorrichtung für Kleinteile;
- **Figur 2**: eine schematische Draufsicht auf eine Problemstellung während des Transportierens von Kleinteilen mit einer robotischen Transportvorrichtung;
- **Figur 3**: eine schematische Draufsicht auf eine erweiterte Problemstellung während des Transportierens von Kleinteilen mit einer robotischen Transportvorrichtung;
- **Figur 4**: eine schematische Darstellung der Funktionsweise einer erfindungsgemäßen robotischen Transportvorrichtung;
- **Figur 5**: eine schematische Darstellung einer erfindungsgemäßen robotischen Transportvorrichtung gesehen von rechts, gesehen von links, und gesehen von oben;
- **Figur 6**: eine schematische Darstellung einer weiteren erfindungsgemäßen robotischen Transportvorrichtung gesehen von rechts, gesehen von links und gesehen von oben; und
- **Figur 7**: eine Darstellung einer alternativen Ausführungsform zu der Ausführungsform in den Figuren 5 oder 6, hier nur als schematische Ansicht von oben.

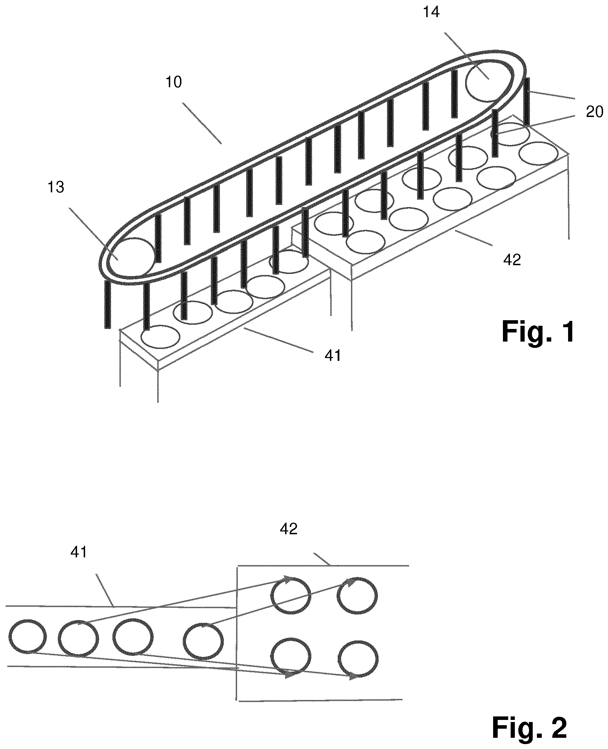

Eine in der **Figur 1** dargestellte robotische Transportvorrichtung besitzt insbesondere einen Transportmechanismus 10. Der Transportmechanismus 10 in der dargestellten Ausführungsform ist nach Art eines Transportbandes und erinnernd an eine Seilbahn aufgebaut. Der Transportmechanismus 10 besitzt also eine ungefähr ovale Form, die zwischen zwei Umlenkrollen 13 und 14 zwei längserstreckte bahnförmige Abschnitte aufweist. Diese bahnförmigen Abschnitte des Transportmechanismus 10 verlaufen in eine Transportrichtung X. Da der Transportmechanismus 10 in der dargestellten Ausführungsform umlaufend ist, wird bei einer Drehung der Umlenkscheiben 13 und 14 eine Bahnseite des Transportmechanismus 10 von links unten nach rechts oben in der Figur 1 bewegt werden, die andere in der Gegenrichtung.

Die robotische Transportvorrichtung mit dem Transportmechanismus 10 kann man sich auch deutlich länger vorstellen, also mit einer längeren Längserstreckung der bahnförmigen, in X-Richtung verlaufenden Abschnitte.

An dem Transportmechanismus 10 sind Teileaufnahmeeinrichtungen 20 angebracht. Diese sind in der Figur 1 als stabförmig herabhängende Elemente schematisch skizziert. Wenn das Band des Transportmechanismus 10 umläuft, laufen diese Teileaufnahmeeinrichtungen 20 jeweils mit um.

Die Teileaufnahmeeinrichtungen 20 können beispielsweise Greifer, Saugnäpfe, Magnete oder ähnliche Elemente aufweisen oder auch schlittenförmig konzipiert sein.

Die Teileaufnahmeeinrichtungen 20 dienen dazu, Kleinteile 30 aufzunehmen. Diese Aufnahme geschieht in einer ersten, für die Aufnahme der Kleinteile 30 vorgesehenen Region 41. Nach dem Aufnehmen der Kleinteile 30 halten die Teileaufnahmeeinrichtungen 20 die Kleinteile 30 fest und transportieren sie auf diese Weise mit dem bewegten Transportmechanismus 10 zu einer zweiten Region 42. Die Region 42 dient zur Ablage der Kleinteile 30.

Die zur Aufnahme in der ersten Region 41 vorgesehenen Kleinteile sind beispielsweise elektronische Bauelemente, die auf einer Unterlage flächig ausgebreitet werden, damit die Teileaufnahmeeinrichtungen 20 jeweils eines dieser Kleinteile 30 aufnehmen können.

Nach dem Transport über den Transportmechanismus 10 werden sie in der zweiten Region 42 sortiert abgelegt.

Eine Steuereinrichtung ist mit einer Antriebseinrichtung oder mehreren Antriebseinrichtungen für den Transportmechanismus 10 verbunden und nimmt somit Einfluss einerseits auf die Umlaufgeschwindigkeit beziehungsweise Transportgeschwindigkeit des Transportmechanismus 10 und somit auch der daran angebrachten Teileaufnahmeeinrichtungen 20 und kann auch den Transportmechanismus 10 gegebenenfalls einschalten oder ausschalten, wenn eine Transportierung einsetzen soll beziehungsweise nicht mehr gewünscht ist.

In der **Figur 2** wird zusätzlich eine Problemstellung dargestellt, die im Stand der Technik unlösbar ist beziehungsweise nur mit erheblichem Aufwand und Vorbereitung lösbar ist.

Zu sehen sind unsortierte Kleinteile 30 in der ersten Region 41 links und auf der rechten Seite Plätze, auf denen die Kleinteile 30 dann in der zweiten Region abgelegt werden sollen. Dabei ist für jedes Kleinteil 30 ein bestimmter Platz vorgesehen. Leicht vorstellbar ist das etwa für elektronische Bauelemente, die für einen Einbau auf einem Chip zugeführt werden und natürlich im Bereich des Chips in der zweiten Region 42 an bestimmte Plätze geliefert werden müssen.

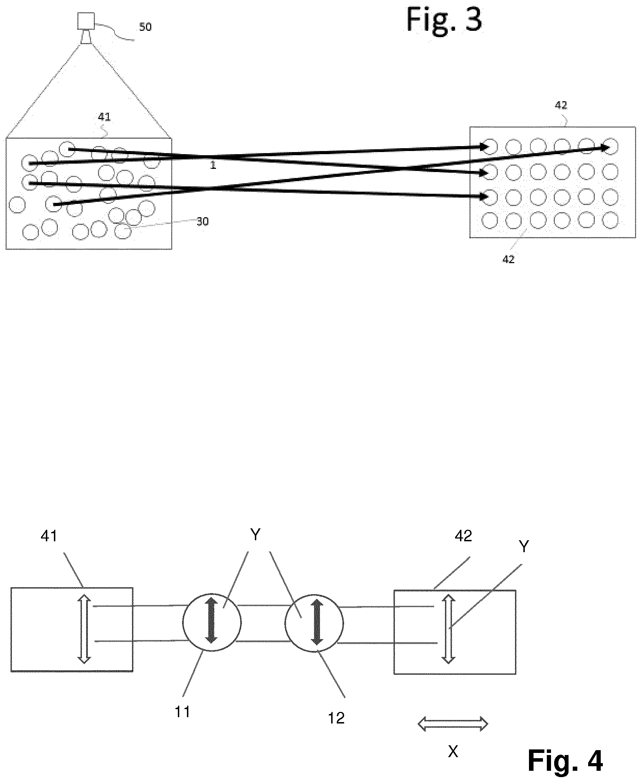

In der **Figur 3** wird eine Problemstellung (ähnlich der aus Figur 2) gezeigt. Man sieht hier in der ersten Region 41 insgesamt vierundzwanzig Kleinteile 30 unsortiert auf einer Fläche ausgebreitet. Diese vierundzwanzig Kleinteile sollen nun auf vierundzwanzig Positionen in der zweiten Region 42 verbracht werden. Dort ist eine bestimmte Ordnung vorgesehen. Dabei ist auch zu berücksichtigen, dass die Kleinteile 30 untereinander keineswegs alle identisch sein müssen, sondern unterschiedlich ausgebildet sein können.

Man sieht zusätzlich zur Figur 2, dass die Distanz zwischen der ersten Region 41 und der zweiten Region 42 durchaus nennenswert sein kann und durch einen Transportmechanismus 10 überwunden werden muss.

Schematisch dargestellt ist, dass in dieser Ausführungsform mit einem Teileerkennungssystem 50 und einer Steuereinrichtung die Teileaufnahmeeinrichtungen 20 so gesteuert werden, dass sie ein Kleinteil 30 erkennen und aufnehmen und auch an der richtigen Stelle wieder ablegen. Das Teileerkennungssystem 50 kann eine Kamera und eine Bilderkennungssoftware aufweisen. Derartige Teileerkennungssysteme 50 werden auch aktuell in Produktionsabläufen in der Industrie zu ähnlichen Zwecken vielfach eingesetzt. Das Teileerkennungssystem 50 kann sowohl vor dem Aufnehmen in der Region 41 ein Kleinteil 30 oder auch mehrere identifizieren als auch über die Steuereinrichtung dafür sorgen, dass die Teileaufnahmeeinrichtung 20 genau dieses Kleinteil 30 dann auch tatsächlich aufnimmt, festhält und nach dem Erreichen eines Zielorts in der Region 42 wieder ablegt.

Auch das Teileerkennungssystem 50 kann auf die Transportgeschwindigkeit oder das Anlaufen oder Beenden der Bewegung des Transportmechanismus 10 Einfluss nehmen, da es beispielsweise erkennen kann, dass gar keine Kleinteile 30 mehr in der ersten Region 41 zur Aufnahme der Kleinteile 30 vorhanden sind oder dass in der Region 42 keine zu besetzenden Plätze für abzulegende Kleinteile 30 mehr vorhanden sind.

Man kann sich vorstellen, dass das Teileerkennungssystem 50 erkennt, welches Kleinteil 30 wo liegt und wo es denn hingefördert werden sollte, der Transportmechanismus 10 der erfindungsgemäßen Transportvorrichtung kann mechanisch alle Plätze erreichen. Herkömmliche sogenannte Pick- and Place-Roboter können diese Aufgabe aufgrund der physikalisch begrenzt möglichen Beschleunigung und Geschwindigkeit nur langsam und mit begrenzter und eingeschränkter Präzision erledigen.

Natürlich sind auch Ausführungsformen ohne ein Teileerkennungssystem denkbar. Dies gilt beispielsweise dann, wenn die erfindungsgemäße Transportvorrichtung dazu genutzt werden soll, bereits in einem Rastermaß angeordnete Kleinteile umzupalettieren auf ein anderes Rastermaß.

Erfindungsgemäß wird nun eine robotische Transportvorrichtung etwa aus der Figur 1 so geändert, wie dies rein schematisch in der **Figur 4** dargestellt ist. Dabei muss es sich nicht notwendig um robotische Transportvorrichtungen analog zur Figur 1 handeln, diese ist nur schematisch verwendet worden, um eine Möglichkeit zum Transport von Kleinteilen in der erfindungsgemäßen Weise darzustellen und zu beschreiben.

In der Figur 4 sieht man wiederum eine erste Region 41 auf der linken Seite und eine zweite Region 42 auf der rechten Seite. Zwischen diesen beiden Regionen ist wieder eine robotische Transportvorrichtung dargestellt, von der hier lediglich die in der Transportrichtung X laufende Konzeption des Transportmechanismus 10 äußerst schematisch von links nach rechts verlaufend gezeigt ist.

Die beiden Umlenkscheiben 13 und 14 aus der Figur 1 sind hier weggelassen, zumal hier auch eine ganz andere Konzeption greifen könnte.

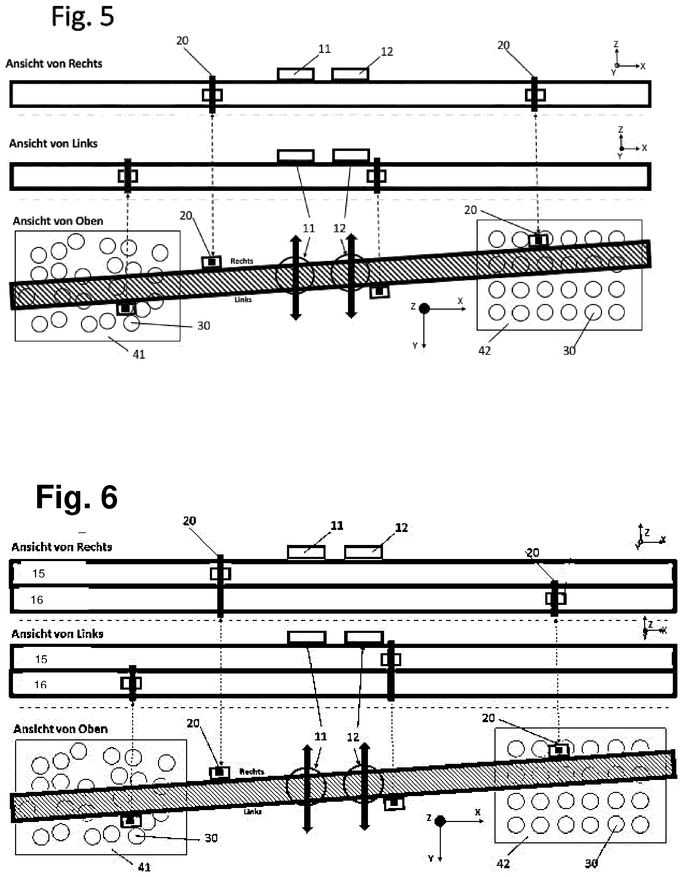

Kern der Erfindung ist es, den Transportmechanismus 10 an zwei Aufhängeelementen 11 und 12 aufzuhängen, die in der Figur 1 nicht dargestellt sind, dafür aber in der **Figur 5****.**

In der Figur 5 ist in größerem Detail, gleichwohl aber schematisch die Architektur und Kinematik einer robotischen Transportvorrichtung beziehungsweise einer Transportvorrichtung für einen Roboter beziehungsweise Zuführroboter dargestellt.

Dabei sieht man in dem obersten Bereich der Darstellung eine Ansicht der robotischen Transportvorrichtung in der Y-Richtung, und zwar von rechts, bezogen auf die X-Richtung.

Darunter ist die gleiche Ausführungsform gesehen ebenfalls in der Y-Richtung, so dass auch hier die X-Richtung nach rechts und die Z-Richtung nach oben aufgetragen ist. Gesehen ist die robotische Transportvorrichtung hier allerdings von links.

Darunter ist die robotische Transportvorrichtung jetzt von oben gesehen, also in oder entgegen der Z-Richtung.

Die Aufhängeelemente 11 und 12 kann man sich in einer ersten Ausführungsform kranartig von oben zugreifend denken, wobei sie unter die Bahn des Transportmechanismus 10 greifen, ohne dessen Bewegung in irgendeiner Form zu verhindern. Auch andere Aufhängungsprinzipien sind hier realisierbar.

Der Gedanke ist jetzt, diese Aufhängeelemente 11 und 12 so zu gestalten, dass sie in der Transportrichtung, also in der X-Richtung, voneinander einen Abstand aufweisen. Darüber hinaus ist jedes der beiden Aufhängeelemente 11, 12 unabhängig voneinander in Y-Richtung verschiebbar. Diese Verschiebung kann wiederum von der oben bereits erörterten Steuereinrichtung koordiniert werden. Für diese Verschiebung kann eine (nicht dargestellte) Antriebseinrichtung eingesetzt werden. Diese Antriebseinrichtung ist vorzugsweise separat von der oder den Antriebseinrichtungen, die für den Antrieb des Transportmechanismus 10 selbst eingesetzt werden.

Interessant ist hier der eintretende Effekt: Verschiebt man beide Aufhängeelemente 11, 12 in der Figur 5 in Y-Richtung, so wird damit der komplette Transportmechanismus 10 ebenfalls parallel verschoben, und zwar samt den Teileaufnahmeeinrichtungen 20, und zwar auch denen, die sich gerade in den Regionen 41 und 42 befinden. Auf diese Weise können auch Kleinteile 30 aufgenommen werden, die sich außerhalb des eigentlichen Zielortes oder Zielbereichs in der Region 41 und 42 befinden. Ob und welche Kleinteile 30 das sind, kann wiederum mit dem Teileerkennungssystem 50 festgestellt werden.

Auch für das Ablegen in der Region 42 gilt gleiches.

Ebenso kann durch eine unabhängige Verschiebung der Aufhängeelemente 11 und 12 entweder der komplette Transportmechanismus 10 in der Blattebene der Figur 3 nach oben oder unten beziehungsweise in der Figur 5 in Y-Richtung verschoben werden, oder aber die Transportrichtung X wird aus ihrer bisherigen Richtung in eine leicht davon abgewinkelte Richtung von links unten nach rechts oben oder links oben nach rechts unten verschoben, mit allen dazwischenliegenden Mittelwerten als Möglichkeit.

Auf diese Weise kann der gesamte Raum der Region 41 und 42 relativ rasch, einfach und zuverlässig belegt werden, ohne dass an den Teileaufnahmeeinrichtungen 20 besonders aufwändige, kostspielige und fehleranfällige Manipulationen und Veränderungen vorgenommen werden müssen. Die gesamte Veränderung reduziert sich auf die beiden Aufhängeelemente 11 und 12.

Man erkennt leicht, dass Teileaufnahmeeinrichtungen 20 sehr unterschiedlich konzipiert werden können und trotzdem mit einer solchen Konstruktion mit zwei unabhängig voneinander verschiebbaren Aufhängeelementen der angestrebte Zweck zuverlässig erreicht wird.

Möglich ist es auch, mehrere Transportmechanismen 10 in einer robotischen Transportvorrichtung einzusetzen. Dies kann entweder durch das parallele Anbringen von mehreren Transportmechanismen 10 an den gleichen Aufhängeelementen 11 und 12 geschehen, sodass sich die Transportmechanismen 10 jeweils simultan bewegen. Ebenso kann es aber auch in einer Ausführungsform vorgesehen werden, alle Aufhängeelemente 11 und 12 unabhängig für mehrere Transportmechanismen 10 aufzubauen.

Eine Möglichkeit für diese Gestaltung ist in der **Figur 6** dargestellt. Man sieht, dass die Darstellungsform der Figur 6 derjenigen in der Figur 5 sehr ähnelt. Die Ansicht von oben, die als unterste Form dargestellt ist, ist praktisch identisch.

Der Unterschied besteht darin, dass der Transportmechanismus 10 hier in zwei Teiltransportmechanismen aufgegliedert ist, die in diesem Falle eine obere Schiene 15 und eine untere Schiene 16 bilden. Die Teileaufnahmeeinrichtungen 20 können dann an den beiden Schienen 15, 16 beziehungsweise den beiden Transportmechanismen unabhängig voneinander angehängt werden. Angedeutet ist hier eine Art Schlitten als Teil einer Teileaufnahmeeinrichtung 20.

Es entsteht eine robotische Transportvorrichtung mit zwei Etagen, sodass sich sogar vier Teileaufnahmeeinrichtungen 20 ohne Einschränkung unabhängig voneinander bewegen und verfahren lassen.

Lediglich vorsorglich sei noch darauf hingewiesen, dass die obere Teileaufnahmeeinrichtung dabei in Y-Richtung leicht neben oder außerhalb der unteren Teileaufnahmeeinrichtung verfahrbar sein sollte, um in Z-Richtung Kollisionen zu vermeiden.

Die robotische Transportvorrichtung kann auch in zwei oder mehr parallel arbeitende robotische Teiltransportvorrichtungen aufgegliedert sein. Diese Teiltransportvorrichtungen, die jede auch als "Roboter" bezeichnet werden kann, würden sich dann funktionsmäßig die zwei Achsen mit jeweils zwei Aufhängungspunkten beziehungsweise Aufhängeelementen 11, 12 aufteilen. Jede der robotischen Teiltransportvorrichtungen kann dabei unabhängig voneinander bewegt werden.

Der Sinn mehrerer Transportmechanismen kann beispielsweise darin bestehen, mehrere oder eine Vielzahl von Kleinteilen 30 von verschiedenen Regionen 41 gleichzeitig für den nächsten Produktionsschritt in einer Fertigungsanlage oder überhaupt in der Region 42 zur Verfügung zu stellen.

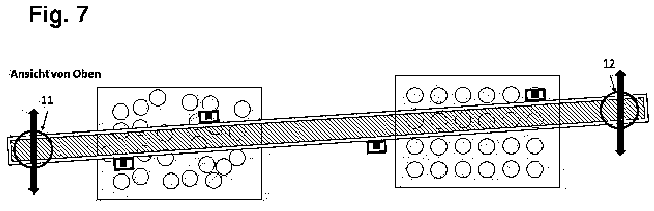

In der **Figur 7** sieht man eine Darstellung, die der Ansicht von oben in den Figuren 5 und 6 ähnelt. Es handelt sich um eine Draufsicht auf eine robotische Transportvorrichtung, die mit einem Transportmechanismus 10 wie in der Figur 5 oder auch mit zwei Transportmechanismen und oberen und unteren Schienen 15, 16 zusammen gedacht sein könnte.

Man sieht, dass im Unterschied zu den Ausführungsformen in den Figuren 5 und 6 die beiden Aufhängeelemente 11 und 12 nicht zwischen den beiden Regionen 41 und 42 angebracht sind, sondern außerhalb von diesen. Die Aufhängeelemente 11 und 12, an denen der Transportmechanismus 10 aufgehängt ist, sind mithin außerhalb der äußersten Bereiche angeordnet, die die Teileaufnahmeeinrichtungen 20 zur Aufnahme der Kleinteile erreichen können.

Der Vorteil einer solchen alternativen Ausführungsform besteht darin, dass die Aufnahmeregion 41 und die Ablageregion 42 näher beieinander liegen können, als bei der Ausführungsform aus den Figuren 5 und 6. Das hat zur Folge, dass sich die Präzision und die Wiederholgenauigkeit des Transportvorgangs insgesamt durch den verringerten Hebeleffekt noch weiter steigern lässt.

Die Ausführungsform in den Figuren 5 und 6 dagegen hat gegenüber dieser Ausführungsform aus der Figur 7 wiederum den Vorteil, dass die Y-Achsen an den Aufhängeelementen 11 und 12 über einen kürzeren Weg verfahren lassen. Das Verfahren in der Ausführungsform in der Figur 7 dauert dementsprechend etwas länger, sodass diese Anordnung dadurch auch etwas langsamer arbeitet.

Es ist jeweils für den Anwendungsfall auszuwählen, welche dieser Ausführungsformen der robotischen Transportvorrichtung die geeignetste ist. Beide haben jeweils ihre Vorteile.

### Bezugszeichenliste

- 10: Transportmechanismus
- 11: erstes Aufhängeelement
- 12: zweites Aufhängeelement
- 13: erste Umlenkscheibe
- 14: zweite Umlenkscheibe
- 15: obere Schiene
- 16: untere Schiene

- 20: Teileaufnahmeeinrichtung

- 30: Kleinteil
- 41: erste Region zur Aufnahme von Kleinteilen
- 42: zweite Region zum Ablegen von Kleinteilen
- 50: Teileerkennungssystem

- X: Transportrichtung
- Y: Richtung senkrecht oder nahezu senkrecht zur Transportrichtung, jedoch horizontal
- Z: Vertikalrichtung

## Patentansprüche

1. Robotische Transportvorrichtung für Kleinteile,
**mit einem** Transportmechanismus (10) zum Transportieren der Kleinteile (30) aus einer ersten, zur Aufnahme vorgesehenen Region (41) zu einer zweiten zur Ablage vorgesehenen Region (42),
**mit einer** Teileaufnahmeeinrichtung (20) zum Aufnehmen einzelner Kleinteile (30) in der ersten Region (41), zum vorübergehenden Festhalten dieser Kleinteile (30) und zum Ablegen der Kleinteile (30) in der zweiten Region (42), **wobei** die Teileaufnahmeeinrichtung (20) an dem Transportmechanismus (10) angebracht ist und mit diesem transportiert wird,
**wobei** der Transportmechanismus (10) so aufgebaut ist, dass er die Teileaufnahmeeinrichtung (20) in eine Transportrichtung (X) transportiert, **wobei** der Transportmechanismus (10) ein endlos umlaufendes Transportsystem (13, 14) aufweist, mit dem die Teileaufnahmeeinrichtung (20) in einer umlaufenden fließenden Bewegung von der ersten Region (41) zur zweiten Region (42) und nach Ablage der Kleinteile (30) zurück zur ersten Region (41) gefördert werden,
**dadurch gekennzeichnet,**
**dass** das endlos umlaufende Transportsystem (13, 14) an zwei Aufhängeelementen (11, 12) aufgehängt ist,
**dass** die zwei Aufhängeelemente (11, 12) in die Transportrichtung (X) einen Abstand voneinander aufweisen, und
**dass** jedes der zwei Aufhängeelemente (11, 12) unabhängig voneinander in eine Richtung (Y) senkrecht oder nahezu senkrecht zur Transportrichtung (X) in der horizontalen Ebene verschiebbar ist.

2. Robotische Transportvorrichtung nach Anspruch 1,
**dadurch gekennzeichnet,**
**dass** der Transportmechanismus (10) so aufgebaut ist, dass er die Teileaufnahmeeinrichtung (20) linear transportiert, abgesehen von Abschnitten des Transportmechanismus (10) benachbart zur ersten Region (41) und/oder benachbart zur zweiten Region (42) und abgesehen von einem möglichen Teilabschnitt des Transportmechanismus (10) zwischen den Regionen (41, 42).

3. Robotische Transportvorrichtung nach Anspruch 1 oder 2,
**dadurch gekennzeichnet,**
**dass** eine oder mehrere Antriebseinrichtungen für die Verschiebung der zwei Aufhängeelemente (11, 12) vorgesehen sind.

4. Robotische Transportvorrichtung nach einem der vorgenannten Ansprüche,
**dadurch gekennzeichnet,**
**dass** der Transportmechanismus (10) mit mehreren, Teileaufnahmeeinrichtungen (20) ausgerüstet ist, welche aufeinanderfolgend Kleinteile (30) aus der ersten Region (41) aufnehmen und hintereinander längs der Transportrichtung (X) zur zweiten Region (42) bewegt werden.

5. Robotische Transportvorrichtung nach Anspruch 4,
**dadurch gekennzeichnet,**
**dass** der Transportmechanismus (10) mit mehreren, voneinander beabstandeten Teileaufnahmeeinrichtungen (20) ausgerüstet ist.

6. Robotische Transportvorrichtung nach Ansprüch 5,
**dadurch gekennzeichnet,**
**dass** auf dem Transportmechanismus (10) eine Staustrecke realisiert ist, die durch eine einzelne Ansteuerung jeder Teileaufnahmeeinrichtung (20) und/oder durch eine durchrutschende Ausbildung des Transportmechanismus (10) realisiert wird, bei der jede Teileaufnahmeeinrichtung (20) auf die zeitbestimmte Ablage des Kleinteils (30) der vorangehenden Teileaufnahmeeinrichtung (20) wartet.

7. Robotische Transportvorrichtung nach Anspruch 6,
**dadurch gekennzeichnet,**
**dass** während der fließenden Bewegung der Abstand zwischen zwei Teileaufnahmeeinrichtungen (20) konstant gehalten wird.

8. Robotische Transportvorrichtung nach einem der vorstehenden Ansprüche,
**dadurch gekennzeichnet,**
**dass** ein oder mehrere Antriebseinrichtungen für den Transportmechanismus (10) vorgesehen ist, und
**dass** die Antriebseinrichtung(en) den Transportmechanismus (10) so antreibt, dass die Teileaufnahmeeinrichtung(en) (20) von der ersten Region (41) zu der zweiten Region (42) bewegt werden.

9. Robotische Transportvorrichtung nach einem der vorstehenden Ansprüche,
**dadurch gekennzeichnet,**
**dass** mehrere Transportmechanismen (10) vorgesehen sind, die aus der gleichen oder aus verschiedenen ersten Regionen (41) jeweils Kleinteile (30) zur zweiten Region (42) fördern.

10. Robotische Transportvorrichtung nach einem der vorstehenden Ansprüche,
**dadurch gekennzeichnet,**
**dass** die Teileaufnahmeeinrichtung (20) Greifer und/oder pneumatische Sauger und/oder magnetisch wirkende Elemente und/oder Schlitten sind oder aufweisen.

11. Verfahren zum Transportieren für Kleinteile (30),
bei dem Kleinteile (30) aus einer ersten, zur Aufnahme vorgesehenen Region (41) zu einer zweiten zur Ablage vorgesehenen Region (42) mit einem Transportmechanismus (10) transportiert werden,
bei dem die einzelnen Kleinteile (30) in der ersten Region (41) durch eine Teileaufnahmeeinrichtung (20) aufgenommen, anschließend vorübergehend festgehalten und schließlich in der zweiten Region (42) abgelegt werden, wobei ein Transport der Teileaufnahmeeinrichtung (20) mit dem Transportmechanismus (10)) in eine Transportrichtung (X) erfolgt,
**wobei** der Transportmechanismus (10) ein endlos umlaufendes Transportsystem (13, 14) aufweist, mit dem die Teileaufnahmeeinrichtung (20) in einer umlaufenden fließenden Bewegung von der ersten Region (41) zur zweiten Region (42) und nach Ablage der Kleinteile (30) zurück zur ersten Region (41) gefördert werden,
**dadurch gekennzeichnet,**
**dass** das endlos umlaufende Transportsystem (13, 14) zweifach in einem Abstand voneinander an Aufhängeelementen (11, 12) aufgehängt ist, **dass** eine Verschiebung der beiden Aufhängeelemente (11, 12) des Transportmechanismus (10) unabhängig voneinander in eine Richtung (Y) senkrecht oder nahezu senkrecht zur Transportrichtung (X) in der horizontalen Ebene oder in die Gegenrichtung vorgenommen wird, und
**dass** der Aufnahmeort und der Ablageort der Teileaufnahmeeinrichtung (20) in der zur Aufnahme der Kleinteile vorgesehenen Region (41) und unabhängig davon in der zur Ablage (30) vorgesehenen zweiten Region (42) unabhängig gewählt wird.

12. Verfahren nach Anspruch 11,
**dadurch gekennzeichnet,**
**dass** die Teileaufnahmeeinrichtung (20) durch den Transportmechanismus (10) linear transportiert wird.

13. Verfahren nach Anspruch 11,
**dadurch gekennzeichnet,**
**dass** abweichend vom überwiegend linearen Transport auf Abschnitten des Transportwegs benachbart zur ersten Region (41) und/oder benachbart zur zweiten Region (42), und/oder auf Teilabschnitten zwischen den Regionen (41, 42) ein nicht linearer Transport erfolgt.

14. Verfahren nach einem der Ansprüche 11 bis 13,
**dadurch gekennzeichnet,**
**dass** der gesamte Transportmechanismus (10) an den beiden Aufhängeelementen (11, 12) und/oder die Teileaufnahmeeinrichtung(en) (20) in eine vertikale Richtung (Z) beweglich sind.

## Claims

1. Robotic transport apparatus for small parts,
**having a** transport mechanism (10) for the transportation of the small parts (30) from a first region (41), provided for collection, to a second region (42), provided for deposition,
**having a** parts-collecting device (20) for the collection of individual small parts (30) in the first region (41), for the temporary firm holding of said small parts (30) and for the deposition of the small parts (30) in the second region (42), **wherein** the parts-collecting device (20) is mounted on the transport mechanism (10) and is transported therewith,
**wherein** the transport mechanism (10) is constructed in such a way that it transports the parts-collecting device (20) in a transport direction (X), **wherein** the transport mechanism (10) has a continuously circulating transport system (13, 14), with which the parts-collecting device (20) is conveyed in a circulating fluid movement from the first region (41) to the second region (42), and back to the first region (41) after the small parts (30) have been deposited,
**characterized**
**in that** the continuously circulating transport system (13, 14) is suspended on two suspension elements (11, 12),
**in that** the two suspension elements (11, 12) have a spacing from one another in the transport direction (X), and
**in that** each of the two suspension elements (11, 12) can be displaced independently of one another in a direction (Y) which is perpendicular or virtually perpendicular to the transport direction (X) in the horizontal plane.

2. Robotic transport apparatus according to Claim 1,
**characterized**
**in that** the transport mechanism (10) is constructed in such a way that it transports the parts-collecting device (20) linearly, except for sections of the transport mechanism (10) adjacent to the first region (41) and/or adjacent to the second region (42) and except for a possible partial section of the transport mechanism (10) between the regions (41, 42).

3. Robotic transport apparatus according to Claim 1 or 2,
**characterized**
**in that** one or more drive devices are provided for the displacement of the two suspension elements (11, 12) .

4. Robotic transport apparatus according to one of the preceding claims,
**characterized**
**in that** the transport mechanism (10) is equipped with a plurality of parts-collecting devices (20) which consecutively collect small parts (30) from the first region (41) and are moved in succession along the transport direction (X) to the second region (42).

5. Robotic transport apparatus according to Claim 4,
**characterized**
**in that** the transport mechanism (10) is equipped with a plurality of spaced-apart parts-collecting devices (20).

6. Robotic transport apparatus according to Claim 5,
**characterized**
**in that** a holding section, which is realized by individual activation of each parts-collecting device (20) and/or by forming the transport mechanism (10) with slipping action, is realized on the transport mechanism (10), in which section each parts-collecting device (20) awaits the time-specific deposition of the small part (30) of the preceding parts-collecting device (20).

7. Robotic transport apparatus according to Claim 6,
**characterized**
**in that** the spacing between two parts-collecting devices (20) is kept constant during the fluid movement.

8. Robotic transport apparatus according to one of the preceding claims,
**characterized**
**in that** one or more drive devices are provided for the transport mechanism (10), and
**in that** the drive device(s) drive(s) the transport mechanism (10) in such a way that the parts-collecting device(s) (20) are moved from the first region (41) to the second region (42).

9. Robotic transport apparatus according to one of the preceding claims,
**characterized**
**in that** a plurality of transport mechanisms (10) are provided, which each convey small parts (30) to the second region (42) from the same or from different first regions (41).

10. Robotic transport apparatus according to one of the preceding claims,
**characterized**
**in that** the parts-collecting devices (20) are, or have, grippers and/or pneumatic suckers and/or magnetically acting elements and/or carriages.

11. Method for the transportation of small parts (30), in which small parts (30) are transported from a first region (41), provided for collection, to a second region (42), provided for deposition, using a transport mechanism (10),
in which the individual small parts (30) are collected in the first region (41) by a parts-collecting device (20), then temporarily firmly held and finally deposited in the second region (42), wherein the parts-collecting device (20) is transported in a transport direction (X) using the transport mechanism (10),
**wherein** the transport mechanism (10) has a continuously circulating transport system (13, 14), with which the parts-collecting device (20) is conveyed in a circulating fluid movement from the first region (41) to the second region (42), and back to the first region (41) after the small parts (30) have been deposited,
**characterized**
**in that** the continuously circulating transport system (13, 14) is suspended on suspension elements (11, 12) at two spaced-apart points,
**in that** the two suspension elements (11, 12) of the transport mechanism (10) are displaced independently of one another in a direction (Y) which is perpendicular or virtually perpendicular to the transport direction (X) in the horizontal plane, or in the opposite direction, and
**in that** the collection location and the deposition location of the parts-collecting device (20) are independently chosen in the region (41) provided for collection of the small parts and, independently thereof, in the second region (42) provided for deposition (30).

12. Method according to Claim 11,
**characterized**
**in that** the parts-collecting device (20) is transported linearly by the transport mechanism (10) .

13. Method according to Claim 11,
**characterized**
**in that,** in a deviation from the predominantly linear transport on sections of the transport path which are adjacent to the first region (41) and/or adjacent to the second region (42), and/or on partial sections between the regions (41, 42), nonlinear transport is effected.

14. Method according to one of Claims 11 to 13,
**characterized**
**in that** the entire transport mechanism (10) is movable on the two suspension elements (11, 12) and/or the parts-collecting device(s) (20) is (are) movable in a vertical direction (Z).

## Revendications

1. Dispositif de transport robotique pour petites pièces,
comprenant un mécanisme de transport (10) pour transporter les petites pièces (30) d'une première région (41) destinée à la réception à une deuxième région (42) destinée à la dépose,
comprenant un dispositif de réception de pièces (20) pour recevoir des petites pièces (30) individuelles dans la première région (41), pour retenir temporairement ces petites pièces (30) et pour déposer les petites pièces (30) dans la deuxième région (42),
dans lequel le dispositif de réception de pièces (20) est fixé au mécanisme de transport (10) et est transporté avec celui-ci,
dans lequel le mécanisme de transport (10) est conçu de telle sorte qu'il transporte le dispositif de réception de pièces (20) dans une direction de transport (X),
dans lequel le mécanisme de transport (10) présente un système de transport en circuit continu (13, 14) permettant de déplacer le dispositif de réception de pièces (20) par un mouvement fluide tournant de la première région (41) à la deuxième région (42) et après la dépose des petites pièces (30) à nouveau vers la première région (41),
**caractérisé**
**en ce que** le système de transport en circuit continu (13, 14) est suspendu à deux éléments de suspension (11, 12),
**en ce que** les deux éléments de suspension (11, 12) présentent un espacement l'un par rapport à l'autre dans la direction de transport (X), et
**en ce que** chacun des deux éléments de suspension (11, 12) peut être décalé indépendamment de l'autre dans une direction (Y) perpendiculaire ou presque perpendiculaire à la direction de transport (X) dans le plan horizontal.

2. Dispositif de transport robotique selon la revendication 1, **caractérisé en ce que** le mécanisme de transport (10) est conçu de telle sorte qu'il transporte le dispositif de réception de pièces (20) de manière linéaire, excepté des parties du mécanisme de transport (10) adjacentes à la première région (41) et/ou adjacentes à la deuxième région (42) et excepté un tronçon possible du mécanisme de transport (10) entre les régions (41, 42).

3. Dispositif de transport robotique selon la revendication 1 ou 2, **caractérisé en ce qu'**un ou plusieurs dispositifs d'entraînement sont prévus pour le décalage des deux éléments de suspension (11, 12).

4. Dispositif de transport robotique selon l'une quelconque des revendications précédentes, **caractérisé en ce que** le mécanisme de transport (10) est équipé de plusieurs dispositifs de réception de pièces (20) qui reçoivent successivement des petites pièces (30) provenant de la première région (41) et qui sont déplacées les unes après les autres le long de la direction de transport (X) jusqu'à la deuxième région (42) .

5. Dispositif de transport robotique selon la revendication 4, **caractérisé en ce que** le mécanisme de transport (10) est équipé de plusieurs dispositifs de réception de pièces (20) espacés les uns des autres.

6. Dispositif de transport robotique selon la revendication 5, **caractérisé en ce que** sur le mécanisme de transport (10) est réalisée une voie d'accumulation qui est réalisée par un pilotage individuel de chaque dispositif de réception de pièces (20) et/ou par une réalisation descendante du mécanisme de transport (10) dans laquelle chaque dispositif de réception de pièces (20) attend la dépose chronologique de la petite pièce (30) du dispositif de réception de pièces (20) précédent.

7. Dispositif de transport robotique selon la revendication 6, **caractérisé en ce que** pendant le mouvement fluide, l'espacement entre deux dispositifs de réception de pièces (20) reste constant.

8. Dispositif de transport robotique selon l'une quelconque des revendications précédentes, **caractérisé**
**en ce qu'**un ou plusieurs dispositifs d'entraînement sont prévus pour le mécanisme de transport (10), et
**en ce que** le ou les dispositifs d'entraînement entraînent le mécanisme de transport (10) de telle sorte que le dispositif de réception de pièces (20) est déplacé de la première région (41) à la deuxième région (42) .

9. Dispositif de transport robotique selon l'une quelconque des revendications précédentes, **caractérisé en ce que** plusieurs mécanismes de transport (10) sont prévus, qui transportent respectivement des petites pièces (30) de la même première région ou de différentes premières régions (41) à la deuxième région (42) .

10. Dispositif de transport robotique selon l'une quelconque des revendications précédentes, **caractérisé en ce que** le dispositif de réception de pièces (20) correspond à ou présente des pinces et/ou des ventouses pneumatiques et/ou des éléments à effet magnétique et/ou des chariots.

11. Procédé de transport de petites pièces (30),
dans lequel des petites pièces (30) sont transportées par un mécanisme de transport (10) d'une première région (41) destinée à la réception à une deuxième région (42) destinée à la dépose,
dans lequel les petites pièces (30) individuelles sont reçues dans la première région (41) par un dispositif de réception de pièces (20), sont ensuite temporairement retenues et enfin déposées dans la deuxième région (42),
dans lequel un transport du dispositif de réception de pièces (20) par le mécanisme de transport (10) est effectué dans une direction de transport (X),
dans lequel le mécanisme de transport (10) présente un système de transport en circuit continu (13, 14) permettant de déplacer le dispositif de réception de pièces (20) par un mouvement fluide tournant de la première région (41) à la deuxième région (42) et après la dépose des petites pièces (30) à nouveau vers la première région (41),
**caractérisé**
**en ce que** le système de transport en circuit continu (13, 14) est suspendu doublement à des éléments de suspension (11, 12) à distance l'un de l'autre,
**en ce qu'**un décalage des deux éléments de suspension (11, 12) du mécanisme de transport (10) est effectué indépendamment l'un de l'autre dans une direction (Y) perpendiculaire ou presque perpendiculaire à la direction de transport (X) dans le plan horizontal ou dans la direction inverse, et
**en ce que** le lieu de réception et le lieu de dépose du dispositif de réception de pièces (20) sont sélectionnés dans la région (41) destinée à recevoir les petites pièces et indépendamment de cela dans la deuxième région (42) destinée à la dépose (30).

12. Procédé selon la revendication 11, **caractérisé en ce que** le dispositif de réception de pièces (20) est transporté de manière linéaire par le mécanisme de transport (10).

13. Procédé selon la revendication 11, **caractérisé en ce qu'**à la différence du transport substantiellement linéaire, un transport non linéaire est effectué sur des parties de la voie de transport adjacente à la première région (41) et/ou adjacente à la deuxième région (42), et/ou sur des tronçons entre les régions (41, 42) .

14. Procédé selon l'une quelconque des revendications 11 à 13, **caractérisé en ce que** l'ensemble du mécanisme de transport (10) est mobile au niveau des deux éléments de suspension (11, 12) et/ou le(s) dispositif(s) de réception de pièces (20) est/sont mobile(s) dans une direction verticale (Z).
